# EUROPEAN PATENT SPECIFICATION

(11) **EP 2 979 249 B1**
(45) Date of publication and mention of the grant of the patent: **22.03.2017**
(21) Application number: 14728277.6
(22) Date of filing: 27.03.2014
(51) Int. Cl.: G06T 7/00

(54) **METHOD OF LOCALIZATION OF ELECTRODES FOR MONITORING BIOELECTRIC SIGNALS FROM THE PATIENT'S BRAIN**
VERFAHREN ZUR LOKALISIERUNG VON ELEKTRODEN ZUR ÜBERWACHUNG BIOELEKTRISCHER SIGNALE AUS DEM GEHIRN EINES PATIENTEN
PROCÉDÉ DE LOCALISATION D'ÉLECTRODES PERMETTANT DE SURVEILLER DES SIGNAUX BIOÉLECTRIQUES PROVENANT DU CERVEAU D'UN PATIENT

(30) Priority: 28.03.2013 IT RM20130186
(43) Date of publication of application: 03.02.2016
(73) Proprietor: Innomed S.r.l., 86077 Pozzilli (IS) (IT)
(72) Inventor: PAVONE, Luigi, I-86029 Trivento (CB) (IT); SEBASTIANO, Fabio, I-86029 Trivento (CB) (IT)
(74) Representative: Cardelli, Guido
(86) International application number: PCT/IB2014/000678
(87) International publication number: WO 2014/155203

(56) References cited:
- HERMES D ET AL: "Automated electrocorticographic electrode localization on individually rendered brain surfaces", JOURNAL OF NEUROSCIENCE METHODS, ELSEVIER SCIENCE PUBLISHER B.V., AMSTERDAM, NL, vol. 185, no. 2, 15 January 2010 (2010-01-15), pages 293-298, XP026819084,
- YANG A. I. ET AL.: "Localization of dense intracranial electrode arrays using magnetic resonance imaging", NEUROIMAGE, 2012, pages 157-165, XP002715902,
- MILLER K J ET AL: "Cortical electrode localization from X-rays and simple mapping for electrocorticographic research: The ''Location on Cortex'' (LOC) package for MATLAB", JOURNAL OF NEUROSCIENCE METHODS, ELSEVIER SCIENCE PUBLISHER B.V., AMSTERDAM, NL, vol. 162, no. 1-2, 15 May 2007 (2007-05-15), pages 303-308, XP027016081,
- DALAL S S ET AL: "Localization of neurosurgically implanted electrodes via photograph-MRI-radiograph coregistration", JOURNAL OF NEUROSCIENCE METHODS, ELSEVIER SCIENCE PUBLISHER B.V., AMSTERDAM, NL, vol. 174, no. 1, 15 September 2008 (2008-09-15), pages 106-115, XP026073401,
- ANDREW R DYKSTRA ET AL: "Individualized localization and cortical surface-based registration of intracranial electrodes", NEUROIMAGE, ACADEMIC PRESS, ORLANDO, FL, US, vol. 59, no. 4, 16 November 2011 (2011-11-16), pages 3563-3570, XP028456614, cited in the application
- Dimitri Kovalev ET AL: "Rapid and Fully Automated Visualization of Subdural Electrodes in the Presurgical Evaluation of Epilepsy Patients", American Journal of Neuroradiology, 1 May 2005 (2005-05-01), page 1078, XP55296221, United States Retrieved from the Internet: URL:http://www.ajnr.org/content/26/5/1078. full.pdf#page=1&view=FitH
- Kevin Morris ET AL: "A Computer-Generated Stereotactic "Virtual Subdural Grid" to Guide Resective Epilepsy Surgery", American Journal of Neuroradiology, 1 January 2004 (2004-01-01), page 77, XP55296228, United States

## Description

### Technical Field

The present invention relates to a method of localization of electrodes for monitoring brain bioelectric signals in patients with neurodegenerative diseases, particularly in patients where invasive electrophysiological investigations are needed.

The field of application is that of medical imaging systems and methods. The patients suffering from certain neurodegenerative diseases, e.g. drug-resistant epilepsy, are subjected to intracranial neurophysiological investigations by using subdural electrodes implanted directly on the cortical surface of the patient.

These electrodes allow the recording of Electroencephalographic (EEG) activity and the mapping of brain functions by the use of electrical stimulations, in order to plan the appropriate surgery operations for a wide range of applications in the field of neurodegenerative diseases, e.g.:
- for drug-resistant epilepsy, in order to correctly identify the epileptogenic zone to be removed, if it is a "non-eloquent" zone, i.e. not responsible for basic functions such as speech, movement, and others. In fact, for the correct interpretation of the EEG data and of those resulting from electrical stimulation, it is necessary to know the exact position of the electrodes on the cortical surface, in order to identify in high detail the epileptogenic zone to be removed, minimizing the volume of removed tissue, and avoiding the possibility of removing healthy tissue; and
- for functional brain mapping, in order to allow the mapping of eloquent zones in patients with brain tumor areas adjacent to important areas, and in order to minimize the amount of brain tissue to be removed.

The localization method proposed is also applicable to neurodegenerative diseases that require the use of electrodes that are not subdural, i.e. applied over the surface of the brain under the dura mater, as well as those requiring the use of intracranial electrodes that reach deeper brain structures.

Said applications include:
- brain neuromodulation, an emerging topic in the field of experimental and clinical neurosciences, with the aim of rebalancing altered neural pathways and of reorganizing damaged neurophysiological connections;
- Parkinson's disease, the commonest disease after Alzheimer's disease, particularly for localizing the electrodes used for Deep Brain Stimulation (DBS).

### Background Art

Over the years, various techniques for the localization of exploring electrodes have been developed.

Some scientific papers were recently published about the problem of the electrode localization and visualization on the rendering of the patient's brain, mainly in the field of epilepsy surgery.

Dykstra et al. (Individualized localization and cortical surface -based registration of intracranial electrodes - Neuroimage. 2012; 59:3563-70) have developed an electrode localizing technique adapted to the neuroanatomy of individual patients, based on the coregistration of pre-implant magnetic resonance imaging (MRI) together with the post-implant Computerized Tomography (CT) using a Mutual Information (MI) algorithm. The extraction of the electrodes from the CT scan is performed through Maximum Intensity Projection (MIP), then the brain surface of the patient is reconstructed and, finally, the extracted and manually detected electrodes are projected onto the cortical rendering.

This technique, although it provides a good accuracy in the electrode localization, in the range of 3 mm on average, requires much time and is not automated, a manual intervention being required for the identification of the electrodes on the CT scan, and is therefore cumbersome.

LaViolette et al., (Three-dimensional visualization of subdural electrodes for presurgical planning - Neurosurgery. 2011;68 (1 Suppl Operative): 152-60), have used the fusion of post-implant MRI scan and CT scan, achieving better results in terms of accuracy as the contribution of the brain shift is low. However, this implied a further examination which the patient has to undergo during the pre-surgical process resulting in a higher amount of exposure to radiation and higher costs for the hospital, and poor results in terms of usability and quality of three-dimensional reconstructions.

The above techniques require manual intervention of an expert user for image processing, the usability thereof by the common users of computers being hindered; they require the use of external software for the detection and/or the visualization of the electrodes on the brain rendering. Ultimately, although the accuracy of the results they provide is acceptable from a clinical point of view, these techniques are very cumbersome also because of the long procedures.

In a publication by Collignon et al. (Collignon et al., "Automated multimodality image registration based on information theory." In Bizais Y., C. Barillot, and R. Di Paola, editors, Proc Information Processing in Medical Imaging, pages 263-274, Dordrecht, The Netherlands, 1995. Kluwer Academic Publishers) reference is made to a method for registering biomedical images based on the concept of information theory, particularly of the MI and Normalized Mutual information (NMI). There is disclosed an algorithm for measuring - given two or more images - the statistical dependence or the redundancy of information among the voxel intensities as measured starting from the probability distribution of the gray values in the images, in all the images, which is assumed to be highest when they are geometrically aligned.

This technique is to maximize the MI from the two-dimensional joint histograms of the two images.

A joint histogram is a multidimensional histogram created from a series of local properties of the image pixels, and each element of this histogram represents the number of pixels which satisfy a given property. In the specific case of the MRI and CT images, these properties are represented by the various levels of gray intensity of the two sets of images. The concept of MI is related to the information content of an image and is based on the concepts of entropy and joint entropy.

Furthermore, J. Ashburner and K.J. Friston ("Unified segmentation." NeuroImage, 26:839-851, 2005) describe an image segmentation method specifically for the segmentation of biomedical images representing the human brain, consisting of a tissue classification that allows each voxel of the image to be assigned to a particular tissue class (grey matter, white matter, cerebrospinal fluid) by using standard template images; therefore, the distribution of the voxel intensities is characterized for each tissue class, so as to assign each voxel to the belonging class based on its intensity. Therefore, the automatic segmentation is achieved by registering the image in a standard space and then selecting the voxels that have the highest probability of belonging to each class according to a Gaussian model.

### Summary of the invention

The method of the present invention has the aim of determining the position of exploring electrodes (subdural or deep) with high accuracy and in a totally automated way, in particular for monitoring recorded bioelectric signals for the study and treatment of various neurodegenerative diseases, such as drug-resistant epilepsy, Parkinson's disease, for brain neuromodulation, by using images acquired before electrode implant by MRI scan, and images acquired after electrode implant by CT scan.

The method of localization of electrodes for monitoring brain bioelectric signals in patients with neurodegenerative diseases includes:
- an image retrieval step including a connection step to storage systems archiving biomedical images present in health care facilities, the so-called Picture Archiving and Communication System (PACS) database;
- an interfacing step for establishing a connection to management system of patients' clinical data or computerized medical records, the so-called Radiology Information System (RIS) database; and
- a biomedical image processing step.

In particular, the connection step concerns the retrieval of biomedical images from hospital PACS database as Digital Imaging and Communications in Medicine (DICOM) format, which is the universal standard for the storage of biomedical images, and their conversion into two sets of volumetric images in a format e.g. Neuroimaging Informatics Technology Initiative (NIFTI) or Analyze (Mayo Foundation, Biomedical Imaging Resource, "Analyze 7.5 File Format") that are required for further processing.

Shortly, the connection step comprises the connection to PACS, the retrieval of images in DICOM format, and their conversion into two sets of volumetric images e.g. in NIFTI or Analyze format.

The interfacing step with RIS system allows the user to gain access to the clinical data of patients whose biomedical images are being processed, so that a complete view of patient's clinical situation can be achieved: in particular, this is useful to know pre-surgical planning data information, in a manner as to cross these data with those from next step output.

The biomedical image processing step comprises:
- loading the two sets of volumetric MR and CAT images;
- coregistration of the two series of images in accordance with the NMI;
- application of Gaussian filters to the two sets of images to remove noise and artifacts;
- MRI image segmentation by Unified Segmentation method;
- electrode extraction from a volumetric CT images with automatic thresholding that can be optimized by the user through the employment of additional parameters (voxel mask size, minimum and maximum distance, contrast, brightness);
- creation of an array of the extracted electrodes with their respective spatial coordinates;
- creation of patient's brain rendering through isosurface extraction technique;
- projection of the extracted electrodes on the cortical rendering.

In other words, in said extraction the coordinates of the extracted electrodes are automatically stored in an array for further localization purposes, and this operation provides also a volumetric image containing only the electrodes.

In particular, the above-mentioned electrode extraction is carried out by selecting from the volumetric CT image only the voxels having intensities above a threshold that is set automatically by analyzing the histogram of the image itself. This threshold is set to a value between 70% and 80% of the maximum intensity in the image. More preferably, the threshold is set to a value equal to 75% of the maximum intensity in the image, in order to extract only high intensity voxels. In fact, the electrode being a metallic element prevents the complete transmission of X-rays through the brain tissue. The resulting greater attenuation of these rays produces a high intensity area in the resulting image. Once this mask is obtained, in order to minimize the false detections due to the presence of other material different from the electrodes such as connecting cables, etc., other parameters are used such as the size of the voxel mask, brightness and contrast thresholds, and minimal and maximum distance between the electrodes within the same voxel mask.

The voxel mask is used to avoid false detections due to the phenomenon of "streak artifact" that is caused by the presence of metallic elements in the CT scan, and the size of the voxel mask indicates the minimum number of voxels for which a certain condition of intensity greater than a threshold value must be valid, in order that the voxel mask is extracted from the image. A too small value of the size of the voxel mask produces false detections due to the presence of the streak artifact, and high values while not producing false detections, do not allow electrodes of reduced dimensions to be detected.

In addition, a threshold of brightness and contrast as a percentage of the maximum value of the overall brightness and contrast of the image is used. Finally, the minimum and maximum distance between electrodes within the same voxel mask is also used, in order to discriminate the belonging of each electrode to an electrode array rather than to another.

The minimum distance allows the localization of the single electrode within an electrode array, which can be both grid and strip, to be discriminated, and the maximum distance between electrodes discriminates the electrode among the various assemblies of electrodes.

### Brief Description of Drawings

Further features and advantages of the present invention will become more apparent from the indicative and, therefore, non-limiting description of a preferred but not exclusive embodiment of a method of localization of electrodes with reference to the accompanying drawings, in which:
Figure 1 is a schematic view of the user's connection to the storage system of biomedical images relating to the implant of subdural electrodes;
Figure 2 is a schematic view of the user in an image pre-processing and connection step for connecting to the management system of the clinical data;
Figure 3 is a schematic view of a particular brain area with enlarged portions showing electrode positions; and
Figure 4 is a view of the screen with a choice of the parameters for electrode localization.

### Description of an embodiment of the invention

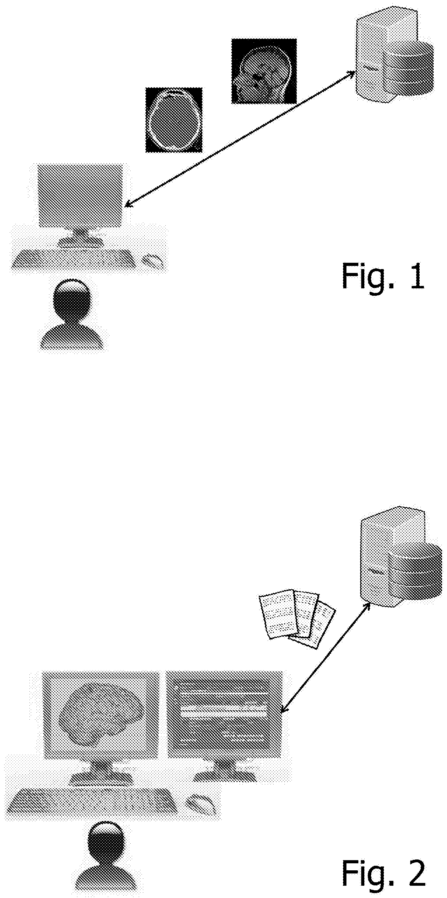

As shown in Figure 1, the user is connected to the DICOM image storage system to acquire MRI and CT images for subsequent processing. However, the user may also find other types of images such as Diffusion Tensor Imaging (DTI), Positron Emission Tomography (PET), Functional Magnetic Resonance Imaging (fMRI), which are useful for the clinical evaluation, in order to provide the user with a multi-modal platform with a possibility of access to various types of diagnostic investigations as well as to clinical information.

As shown in Figure 2, at any time the user can also interface with the clinical data management system to find all the information about each patient to know e.g. clinical histories, patients' reports, other diagnostic images, etc. The user starts image pre-processing and obtains the electrode localization on the cerebral cortical rendering.

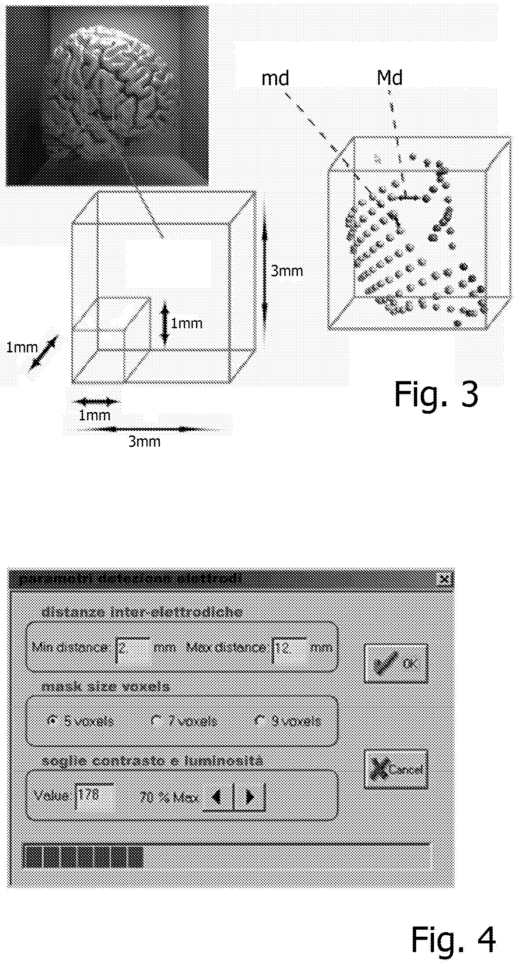

In Figure 3 there is shown a detail of the brain area with the relevant positioning of the electrodes within nine voxels that are created with 1 mm voxels. The maximum distance between the electrodes is indicated as Md, and the minimum distance is indicated as md.

These thresholds are chosen by the user according to a mask so as to achieve an optimal combination of the thresholds that allows all the electrodes or the desired electrodes to be extracted.

The method according to the invention allows that each electrode on the cerebral cortex is localized with extreme accuracy, in the order of 1 mm, in times appreciably reduced as compared with the current procedures that require a manual detection of the electrodes and the use of other software for visualizing them on the cerebral cortex of the patient.

Furthermore, the method according to the invention as a whole allows, in addition to localizing with high accuracy and in a completely automatic way the position of the exploring electrodes and the anatomical and functional areas under neurophysiological investigation, the patient to be followed from a phase for acquiring images for diagnosis, to the surgery, thanks to its ability to manage and have access to various pieces of information such as acquisition, processing and visualization of radiological images for diagnosis, ability to access medical records and laboratory tests, and to correlate them. Briefly, the features of the method according to the invention relate to:
the extraction of the electrodes from the CT image, the extraction being totally automated and without any need of manual intervention; the fully automatic, highly accurate, localization and visualization of the electrodes on the cerebral cortex, since the error is in the order of 1 mm, and with a reduced execution time, as a result of the automatic method and the absence of manual intervention; and the multimodality of information, with access to diagnostic data, such as radiological images, and clinical data, such as medical history, laboratory tests, clinical history, neurophysiological data from bioelectric signals acquired by means of such electrodes.

The image processing step provides as a result a set of structured data consisting of MRI image, CT scan and image with electrodes in DICOM format and a mesh of the extracted isosurface with the electrodes projected over it, the structured data being exportable to all common neuronavigation systems used in neurosurgical operations.

## Claims

1. A method of localization of electrodes for monitoring bioelectric signals from the brain in patients suffering from neurodegenerative diseases, comprising:
- a retrieving step concerning the retrieval of biomedical images in the form of MRI and CT scans from hospital RIS-PACS databases as Digital Imaging and Communications in Medicine (DICOM) format, and their conversion into two sets of volumetric images in a format such as Neuroimaging Informatics Technology Initiative (NIFTI) or Analyze (Mayo Foundation, Biomedical Imaging Resource, "Analyze 7.5 File Format");
- an interfacing step for establishing a connection to the clinical data of a patient whose biomedical images are being processed; and
- a biomedical image processing step, comprising:
- loading the two sets of volumetric MRI and CT images;
- co-registering said two sets of images according to the Normalized Mutual Information (NMI);
- application of Gaussian filters to said two sets of images to remove noise and artifacts;
- MRI image segmentation by using the Unified Segmentation method;
- extraction of electrodes from a volumetric CT image;
- creation of the array of electrodes extracted with their respective spatial co-ordinates for further anatomical localization purposes;
- creation of the patient's brain rendering by means of isosurface extraction technique;
- projection of the extracted electrodes on the cortical rendering, **characterized in that** the extraction of electrodes from the volumetric CT image is done by automatic thresholding that is optimized by the user's setting of parameters including voxel intensity, size of the voxel mask obtained by the automatic thresholding, minimum and maximum distance between the electrodes, contrast and brightness.

2. The method according to claim 1, wherein said electrode extraction is performed by automatically selecting from the volumetric CT image only the voxels with intensities above a threshold set at a value ranging between 70% and 80% of the maximum intensity in the image.

3. The method according to claim 2, wherein said threshold is set to a value of 75% of the maximum intensity in the image.

## Patentansprüche

1. Verfahren zur Lokalisierung von Elektroden zur Überwachung bioelektrischer Signale des Gehirns bei Patienten, die an neurodegenerativen Erkrankungen leiden, umfassend:
- einen Abrufschritt betreffend das Abrufen biomedizinischer Bilder in der Form von MRI- und CT-Scans aus RIS-PACS-Datenbanken von Krankenhäusern im DICOM-Format (Digital Imaging and Communications in Medicine) und deren Umwandlung in zwei Reihen volumetrischer Bilder in einem Format wie Neuroimaging Informatics Technology Initiative (NIFTI) oder Analyze (Mayo Foundation, Biomedical Imaging Resource, "Analyze 7.5 File Format");
- einen Schnittstellenschritt zur Herstellung einer Verbindung mit den klinischen Daten eines Patienten, dessen biomedizinische Bilder verarbeitet werden, und
- einen Schritt zum Verarbeiten biomedizinischer Bilder, umfassend:
- das Laden von zwei Reihen volumetrischer MRI- und CT-Bilder;
- das Co-Registrieren dieser zwei Reihen von Bildern gemäß Normalized Mutual Information (NMI);
- das Anwenden von Gauß-Filtern auf die zwei Reihen von Bildern, um Geräusche und Bildfehler zu beseitigen;
- die MRI-Bildsegmentierung durch die Nutzung des Unified-Segmentation-Verfahrens;
- das Extrahieren von Elektroden aus einem volumetrischen CT-Bild;
- das Erstellen der Anordnung extrahierter Elektroden mit deren jeweiligen räumlichen Koordinaten zum Zweck der weiteren anatomischen Lokalisierung;
- das Erstellen einer Darstellung des Gehirns des Patienten mittels Isoflächen-Extraktionstechnik;
- das Projizieren der extrahierten Elektroden auf der kortikalen Darstellung, **dadurch gekennzeichnet, dass** die Extraktion von Elektroden aus dem volumetrischen CT-Bild durch automatische Schwellwertbildung erfolgt, was dadurch optimiert wird, dass der Nutzer Parameter einschließlich Voxel-Intensität, Größe der durch die automatische Schwellwertbildung erhaltenen Voxel-Maske, Mindest- und Höchstabstand zwischen den Elektroden, Kontrast und Helligkeit festlegt.

2. Verfahren nach Anspruch 1, wobei die Elektrodenextraktion dadurch erfolgt, dass aus dem volumetrischen CT-Bild automatisch nur die Voxel mit einer Intensität über einem Sollschwellenwert im Bereich zwischen 70 % und 80 % der maximalen Intensität im Bild ausgewählt werden.

3. Verfahren nach Anspruch 2, wobei für den Schwellenwert ein Wert von 75 % der maximalen Intensität im Bild festgelegt wird.

## Revendications

1. Procédé de localisation d'électrodes permettant de surveiller des signaux bioélectriques provenant du cerveau de patients souffrant de maladies neurodégénératives, comprenant :
- une étape consistant à récupérer des images biomédicales sous forme d'IRM et de tomodensitométries à partir de bases de données RIS-PACS d'hôpitaux au format médical DICOM, et leur conversion en deux ensembles d'images volumétriques dans un format tel que l'Initiative Technologique en Informatique pour la Neuro-imagerie (*Neuroimaging Informatics Technology Initiative* (NIFTI)) ou Analyse (*Mayo Foundation, Biomedical Imaging Resource,* « Format de fichier Analyze 7.5 ») ;
- une étape d'interfaçage servant à établir une connexion aux données cliniques d'un patient dont des images biomédicales sont en cours de traitement ; et
- une étape de traitement des images biomédicales, comprenant :
- le téléchargement des deux ensembles d'images volumétriques sous forme d'IRM et de tomodensitométries ;
- le coenregistrement desdits deux ensembles d'images selon les Informations mutuelles normalisées (NMI) ;
- l'application de filtres de Gauss auxdits deux ensembles d'images pour supprimer le bruit et les artéfacts ;
- la segmentation des images IRM en utilisant la Méthode de Segmentation Unifiée ;
- l'extraction d'électrodes à partir d'images volumétriques de tomodensitométries ;
- la création d'un réseau d'électrodes extraites avec leurs coordonnées spatiales respectives aux fins de localisation anatomique postérieure ;
- la création de la traduction du cerveau du patient par le biais de la technique de l'extraction de l'isosurface ;
- la projection des électrodes extraites sur l'interprétation corticale, **caractérisé en ce que** l'extraction des électrodes à partir des images volumétriques de tomodensitométries est effectuée par un seuillage automatique étant optimisé par le réglage par l'utilisateur de paramètres incluant l'intensité des voxels, la dimension du masque de voxels obtenu par le seuillage automatique, la distance minimum et maximum entre les électrodes, le contraste et la luminosité.

2. Procédé selon la revendication 1, dans lequel ladite extraction d'électrodes est effectuée en sélectionnant automatiquement, à partir uniquement d'images volumétriques de tomodensitométries, les voxels avec des intensités supérieures à un seuil fixé à une valeur comprise entre 70 et 80 % de l'intensité maximum dans l'image.

3. Procédé selon la revendication 2, dans lequel ledit seuil est fixé à une valeur correspondant à 75 % de l'intensité maximum dans l'image.
